# EUROPÄISCHE PATENTANMELDUNG

(11) **EP 4 741 116 A1**
(43) Veröffentlichungstag der Anmeldung: **13.05.2026**
(21) Anmeldenummer: 25213958.9
(22) Anmeldetag: 06.11.2025
(51) Int. Cl.: B25J 15/00, B25J 15/04

(54) **ANLAGE UMFASSEND EINE ABLAGEVORRICHTUNG FÜR EINEN ENDEFFEKTOR EINES MANIPULATORS**

(30) Priorität: 07.11.2024 AT 508882024
(71) Anmelder: TRUMPF Maschinen Austria GmbH & Co. KG., 4061 Pasching (AT)
(72) Erfinder: KOVJENIC, Nenad, 4020 Linz (AT)
(74) Vertreter: Burger, Hannes Alfred

(57) **Zusammenfassung**

Die Erfindung betrifft eine Anlage (1) umfassend eine Ablagevorrichtung (4) für einen Endeffektor (3) eines Manipulators und eine, der Ablagevorrichtung (4) zuordenbaren Justiervorrichtung (2) zum Adaptieren des Endeffektors (3), wobei der Endeffektor (3) ein Tragelement (5) und ein damit gekoppeltes Greiferelement (6) umfasst, wobei das Greiferelement (6) entlang des Tragelements (5) geführt verlagerbar und relativ zum Tragelement (5) mittels einer Haltevorrichtung (7) am Tragelement (5) positionsfixierbar ist, wobei die Justiervorrichtung (2) ein Fixierelement (8) zum Positionsfixieren des Greiferelements (6) und eine, mit der Haltevorrichtung (7) wirkverbunden koppelbare Verschlussvorrichtung (9) zum Fixieren oder Lösen der Haltevorrichtung (7) umfasst, wobei die Positionsfixierung des Greiferelements (6) am bzw. relativ zum Tragelement (5) mittels der Verschlussvorrichtung (9) in Wirkverbindung mit der Haltevorrichtung (7) aufhebbar und herstellbar ist. Die Erfindung betrifft weiters noch ein Verfahren zum Adaptieren des Endeffektors (3).

## Beschreibung

Die Erfindung betrifft eine Anlage mit einer Ablagevorrichtung für einen Endeffektor eines oder für einen Manipulator, wobei der Endeffektor mittels einer Justiervorrichtung adaptierbar ist, sodass mittels dem Manipulator Werkstücke mit unterschiedlicher Geometrie manipulierbar sind. Vorzugsweise kann die erfindungsgemäße Anlage eine Teilkomponente eines Systems umfassend eine Biegemaschine oder eine Abkantpresse und den Manipulator sein. Alternativ kann die Anlage selbst auch einen Manipulator und eine Biegemaschine oder eine Abkantpresse umfassen, wobei Werkstücke mittels des Manipulators der Biegemaschine oder der Abkantpresse zuführbar sind bzw. bei welcher Anlage mittels des Manipulators im Zusammenwirken mit der Biegemaschine Werkstücke bearbeitbar sind.

Aus der JPH 11 216 695 A ist ein Endeffektor bekannt, der einen verstellbaren Greifabschnitt aufweist, welcher mit einer Anschlagvorrichtung bzw. einer Führungsanordnung einstellbar ist.

Aufgabe der vorliegenden Erfindung war es, die Nachteile des Standes der Technik zu überwinden und eine Vorrichtung und ein Verfahren zur Verfügung zu stellen, mittels derer die Adaption des Endeffektor für unterschiedliche Geometrien von Werkstücken einfach umsetzbar ist.

Diese Aufgabe wird durch eine Vorrichtung und ein Verfahren gemäß den Ansprüchen gelöst.

Die erfindungsgemäße Anlage umfasst eine Ablagevorrichtung für einen Endeffektor eines Manipulators und eine, der Ablagevorrichtung zuordenbaren Justiervorrichtung zum Adaptieren des Endeffektors, wobei der Endeffektor ein Tragelement und ein Greiferelement umfasst, wobei das Greiferelement entlang des Tragelements geführt verlagerbar und relativ zum Tragelement mittels einer Haltevorrichtung am bzw. mit dem Tragelement positionsfixierbar ist, wobei die Justiervorrichtung ein Fixierelement zum Positionsfixieren des Greiferelements und eine, mit der Haltevorrichtung wirkverbunden koppelbare Verschlussvorrichtung zum Fixieren oder Lösen der Haltevorrichtung umfasst, wobei die Positionsfixierung des Greiferelements am Tragelement mittels der Verschlussvorrichtung in Wirkverbindung mit der Haltevorrichtung aufhebbar und herstellbar ist.

Unter Adaption ist in diesem Sinne zu verstehen, dass das Greiferelement relativ zum Tragelement derart verlagert und relativ zum Tragelement arretiert wird, dass der Endeffektor für die Aufnahme eines geometrisch andersartigen Werkstücks adaptiert wurde. Das Greiferelement ist dabei mittels der Haltevorrichtung mit dem Tragelement gekoppelt, wobei die Kopplung mittels der Verschlussvorrichtung wahlweise lösbar und wieder arretierbar ist. Die Haltevorrichtung und die Verschlussvorrichtung können also in Wirkverbindung zueinander gebracht werden, um die Kopplung zwischen Greiferelement und Tragelement entweder zu lösen oder zu fixieren. Dabei sind unterschiedlichste Kopplungen denkbar, wie beispielsweise eine Schraubverbindung, die beispielsweise mit einem entsprechenden Werkzeug der Verschlussvorrichtung gelöst oder fixiert werden kann. Ist die Positionsfixierung der Haltevorrichtung zwischen Greiferelement und Haltevorrichtung gelöst, so ist das Greiferelement wenigstens in einem Freiheitsgrad beispielsweise entlang des Tragelements verlagerbar, wobei diese Verlagerung vorzugsweise derart ausgebildet ist, dass das Greiferelement weiterhin unverlierbar mit dem Tragelement gekoppelt ist. Beispielsweise kann dazu eine Linearführung des Greiferelements am Tragelement vorgesehen sein. Wird die Kopplung der Haltevorrichtung mittels der Verschlussvorrichtung nunmehr fixiert, so ist das Greiferelement relativ zum Tragelement positionsfixiert.

Unter einem Tragelement kann in diesem Sinne also entweder ein Querträger oder auch eine Grundplatte zur Aufnahme der Haltevorrichtung und damit des Greiferelements verstanden werden. Beispielsweise kann die Position eines Greiferelements über eine, im Tragelement, also beispielsweise in der Grundplatte oder am Querträger, vorgesehene Führung der Haltevorrichtung derart adaptiert werden, dass die Positionsfixierung der Haltevorrichtung aufgehoben wird, um dann mittels der Justiervorrichtung die Position des Greiferelements relativ zum Tragelement adaptieren zu können.

Der Endeffektor kann beispielsweise von einem Manipulator aufgenommen werden, um damit Arbeiten zu verrichten, wie beispielweise Werkstücke zu manipulieren.

Ein Greiferelement kann dabei jegliche Ausgestaltungsform haben, sofern damit, im Zusammenwirken mit einem Manipulator, Werkstücke aufnehmbar sind, sodass ein Werkstück mittels des Endeffektors aufnehmbar und mittels des Manipulators manipulierbar ist. Beispielsweise kann unter einem Greiferelement ein Vakuumsauger, ein Unterdruck-Saugnapf, ein Zangengreifer oder jegliches ähnliches Greiferelement wie auch beispielsweise ein Magnetgreifer verstanden werden, mit dem ein Werkstück aufnehmbar ist. Die Erfindung ist nicht auf eine Ausführungsform mit nur einem Greiferelement eingeschränkt. So können beispielsweise mehrere Tragelemente oder Komponenten des Tragelements, wie beispielweise mehrere Grundplatten oder Träger oder Querträger des Endeffektors mit Greiferelementen oder auch ein Tragelement mit mehreren Greiferelement ausgebildet sein, wobei jedenfalls der Endeffektor weiterhin erfindungsgemäß adaptierbar ist, sodass der Endeffektor durch Adaptierung mittels der Justiervorrichtung auf unterschiedlichste Geometrien von Werkstücken adaptierbar bzw. einstellbar ist. In diesem Zusammenhang kann auch noch vorgesehen sein, dass ein Greiferelement mit einer Haltvorrichtung gemäß der Offenbarung in EP 4 076 869 B1 fixierbar bzw. fixiert ist. So kann ein derartiges Greiferelement oder können eine Vielzahl dieser in einem Nahbereich der Ablagevorrichtung gelagert oder zwischengelagert sein, um den Endeffektor, im Speziellen mittels der Justiervorrichtung, mit neuen oder unterschiedlichen Greiferelementen ausstatten zu können.

Unter einem Fixierelement ist dabei eine Komponente der Justiervorrichtung zu verstehen, mittels derer wenigstens ein Greiferelement positionsfixierbar ist. Dies hat den Sinn, dass einerseits die Kopplung zwischen Greiferelement und Querträger anwendungssicher lösbar und fixierbar ist und dass andererseits der Endeffektor auf unterschiedliche Geometrien von Werkstücken adaptierbar ist. Dies wird insbesondere im Zuge der Beschreibung des erfindungsgemäßen Verfahrens noch näher erläutert.

Unter einem Tragelement kann dabei jegliche Struktur bzw. insbesondere balkenartige oder plattenartige Struktur verstanden werden, die eine Auskragung des daran fixierbaren Greiferelements von der Kopplungsstelle des Endeffektors und des Manipulators ermöglicht. Ein Tragelement ist in diesem Sinne auf keine spezielle geometrische Ausgestaltung eingeschränkt.

Unter einem Manipulator kann im Sinne der Erfindung beispielsweise ein Mehraschs-Roboter verstanden werden, der zur Aufnahme eines Endeffektors ausgebildet ist.

Insbesondere kann es vorteilhaft sein, wenn die Anlage Teil eines Systems ist, das auch eine Biegemaschine oder eine Abkantpresse und den Manipulator zur Aufnahme des Endeffektors umfasst. Alternativ kann die Anlage selbst auch eine Biegemaschine oder eine Abkantpresse umfassen. Bei einer Biegemaschine oder einer Abkantpresse können Werkstücke mit unterschiedlichster Werkstückgeometrie bearbeitet werden. Um nunmehr diese, bezüglich deren Geometrie unterschiedlichen Werkstücke mittels des Manipulators manipulieren zu können, kann es notwendig sein, dass der Endeffektor des Manipulators für die spezielle Werkstückgeometrie geeignet ist. Um nunmehr den Endeffektor nicht umständlicher Weise jeweils für unterschiedliche Geometrien von Werkstücken auswechseln zu müssen oder komplexe Verstellmechanismen des Endeffektors am Endeffektor selbst vorsehen zu müssen, kann der Endeffektor entsprechend der vorliegenden Erfindung auf einfache und effektive Weise durch ein Zusammenwirken des Manipulators bzw. des Endeffektors und der Justiervorrichtung oder durch Ablage des Endeffektors in der dafür vorgesehenen Ablagevorrichtung und entsprechende Wechselwirkung mit der Justiervorrichtung adaptiert werden. Die Justiervorrichtung kann dabei im Nahbereich des Manipulators positionsfixiert positioniert sein oder eben im Nahbereich der Ablagevorrichtung für den Endeffektor positioniert sein. Insbesondere kann die Justiervorrichtung in einem Bereich der Anlage positioniert sei, der beim Bearbeiten von Werkstücken außerhalb des Bearbeitungsbereiches liegt. Dadurch wird die Wendefähigkeit des Manipulators bei der Bearbeitung von Werkstücken nicht beeinträchtigt. Als synergetischer Effekt der erfindungsgemäßen Anlage wird die Wendefähigkeit im Speziellen sogar verbessert, da zum Adaptieren des Endeffektors keine aufwendigen Anbauten am Endeffektor selbst mehr notwendig sind.

Vorteilhaft ist auch noch, dass der erfindungsgemäße Endeffektor gegenüber einem anderen Endeffektor, der Komponenten zur selbsttätigen Adaptierung aufweist, wie beispielsweise Servomotoren, Stellstangen und dergleichen, weniger Masse aufweisen kann und daher agiler und wendiger ist sowie vor allem weniger Energieverbrauch beim Bewegen desselben benötigt. Dadurch erlangt der Endeffektor auch einen größeren Verstellbereich, weil kein Platz für Stellantriebe verbraucht wird.

Vorteilhafterweise kann auch noch vorgesehen sein, dass die Ablagevorrichtung mehrere Ablageplätze für mehrere Endeffektoren umfasst, wobei für die Ablagevorrichtung jedenfalls eine Justiervorrichtung vorgesehen ist, um damit die Endeffektoren adaptieren zu können. Die Justiervorrichtung kann also aktive Mittel, wie etwa die Verschlussvorrichtung und/oder das Fixierelement umfassen, um einerseits die Haltevorrichtung zu Lösen und andererseits die Haltevorrichtung mit Greiferelement oder ein Greiferelement bezüglich dessen Positionierung relativ zum Tragelement zu adaptieren.

Des Weiteren kann es zweckmäßig sein, wenn der Endeffektor ein weiteres Tragelement, insbesondere einen Längsträger, umfasst, wobei das Tragelement, insbesondere der Querträger, entlang des weiteren Tragelements geführt verlagerbar und relativ zum weiteren Tragelement mittels der Haltevorrichtung oder einer weiteren Haltevorrichtung am Tragelement positionsfixierbar ist. Dadurch kann die Adaptierbarkeit des Endeffektors verbessert sein.

Ferner kann vorgesehen sein, dass die Justiervorrichtung ein Rahmengerüst und einen Querbalken umfasst, wobei der Querbalken am Rahmengerüst geführt verlagerbar ist, und wobei das Fixierelement und die Verschlussvorrichtung jeweils am Querbalken geführt verlagerbar sind. Somit kann die Justiervorrichtung für unterschiedlichste Endeffektoren zum Adaptieren derselben verwendet werden und auch unterschiedliche Adaptierungen vornehmen. Es kann in diesem Zusammenhang auch vorgesehen sein, dass der Manipulator und die Justiervorrichtung mit einer gemeinsamen Steuer- bzw. Regelvorrichtung kommunikationsverbunden sind, sodass die Adaptierung vollautomatisch durch entsprechende Verlagerung der Komponenten der Justiervorrichtung und eine entsprechende Interaktion des Manipulators ausführbar ist.

Darüber hinaus kann vorgesehen sein, dass das Fixierelement zum Greiferelement wenigstens abschnittsweise formkomplementär ausgebildet ist, sodass das Greiferelement mittels des Fixierelements in wenigstens eine Raumrichtung positionsfixierbar ist. Dadurch kann das Fixierelement auf einfache Weise einen zumindest abschnittweisen Formschluss mit dem Greiferelement eingehen, sodass dieses auf einfache Weise fixierbar ist.

Vorteilhaft ist auch eine Ausprägung, gemäß welcher vorgesehen sein kann, dass mittels der Verschlussvorrichtung in Wirkverbindung mit der Haltevorrichtung eine lösbare Verbindung zwischen Tragelement und Greiferelement herstellbar ist. Somit kann die Kopplung mittels der Haltevorrichtung, mittels derer das Greiferelement mit dem Tragelement gekoppelt ist, wiederholt gelöst und wieder hergestellt werden, sodass eine einfache und wiederholte Adaptierung des Endeffektors ermöglicht ist. Als Haltevorrichtung kann beispielsweise ein Exzenter oder ein Schnellspanner vorgesehen sein, wobei auch weitere Ausführungsformen einer Haltevorrichtung denkbar sind, wie beispielsweise aus der EP 4 076 869 B1 bekannt geworden sind.

Gemäß einer Weiterbildung ist es möglich, dass das Greiferelement durch Verlagerung des Fixierelements im gelösten Zustand der Haltevorrichtung relativ zum Tragelement verlagerbar ist. Dadurch ist ermöglicht, dass nach dem Lösen der Kopplung der Haltevorrichtung eine Adaptierung des Endeffektors durch eine Bewegung des Fixierelementes der Justiervorrichtung vorgenommen werden kann. Somit muss der Manipulator selbst keine Bewegung zur Adaptierung des Endeffektors ausführen. Die Justiervorrichtung kann folglich einen Endeffektor, der in der Ablagevorrichtung der erfindungsgemäßen Anlage abgelegt bzw. positioniert oder positionsfixiert ist, adaptieren.

Die Erfindung betrifft weiters noch ein Verfahren zum Adaptieren eines Endeffektors eines Manipulators einer Anlage mit einer, einer Ablagevorrichtung der Anlage zuordenbaren Justiervorrichtung,
- wobei der Endeffektor ein Tragelement und ein Greiferelement umfasst, wobei das Greiferelement entlang des Tragelements geführt verlagerbar und relativ zum Tragelement mittels einer Haltevorrichtung am Tragelement positionsfixierbar ist,
- wobei die Justiervorrichtung ein Fixierelement und eine Verschlussvorrichtung umfasst, wobei das Verfahren die folgenden Verfahrensschritte umfasst:
- Positionieren des Endeffektors im Nahbereich der Justiervorrichtung, insbesondere in der Ablagevorrichtung;
- Fixieren bzw. Positionsfixieren des Greiferelements mittels dem Fixierelement;
- Lösen des Greiferelements durch Lösen der Haltevorrichtung mittels der Verschlussvorrichtung;
- Verlagern des Greiferelements;
- Fixieren des Greiferelements durch Fixieren der Haltevorrichtung mittels der Verschlussvorrichtung.

Dadurch kann der Endeffektor auf einfache Weise adaptiert werden, wobei weiters auch der Endeffektor eine reduzierte Masse gegenüber einem andersartigen Endeffektor mit darauf ausgebildeter Verstellvorrichtung für ein Greiferelement aufweist.

Ferner kann es zweckmäßig sein, wenn das Greiferelement durch eine Bewegung des Endeffektors mittels des Manipulators verlagert wird. Dabei ist die Justiervorrichtung positionsfixiert und der Manipulator bewegt den Endeffektor relativ zur positionsfixierten Justiervorrichtung, wobei das Greiferelements relativ zum Querträger verlagert wird.

Alternativ kann auch noch vorgesehen sein, dass das Greiferelement durch eine Bewegung des Fixierelements mittels der Justiervorrichtung verlagert wird.

Darüber hinaus kann vorgesehen sein, dass die Haltevorrichtung eine Schraubverbindung zum Fixieren und Lösen des Greiferelements aufweist, wobei die Schraubverbindung mittels der Verschlussvorrichtung fixiert oder gelöst wird. Dadurch ist das Greiferelement auf einfache Weise mit dem Tragelement, insbesondere mit dem Querträger, koppelbar bzw. dazu positionsfixiert verbindbar, wobei diese Kopplung auch auf einfache Weise wieder lösbar ist.

Zum besseren Verständnis der Erfindung wird diese anhand der nachfolgenden Figuren näher erläutert.

Es zeigen jeweils in stark vereinfachter, schematischer Darstellung:
- Fig. 1: einen Ausschnitt einer möglichen ersten Ausgestaltungsform einer Anlage mit einer Justiervorrichtung für einen Endeffektor eines Manipulators;
- Fig. 2: einen Detailansicht der Justiervorrichtung und eines Abschnitts des Endeffektors des Manipulators;
- Fig. 3: eine mögliche Ausführungsform von Teilen der erfindungsgemäßen Anlage und des damit adaptierbaren Endeffektors:

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

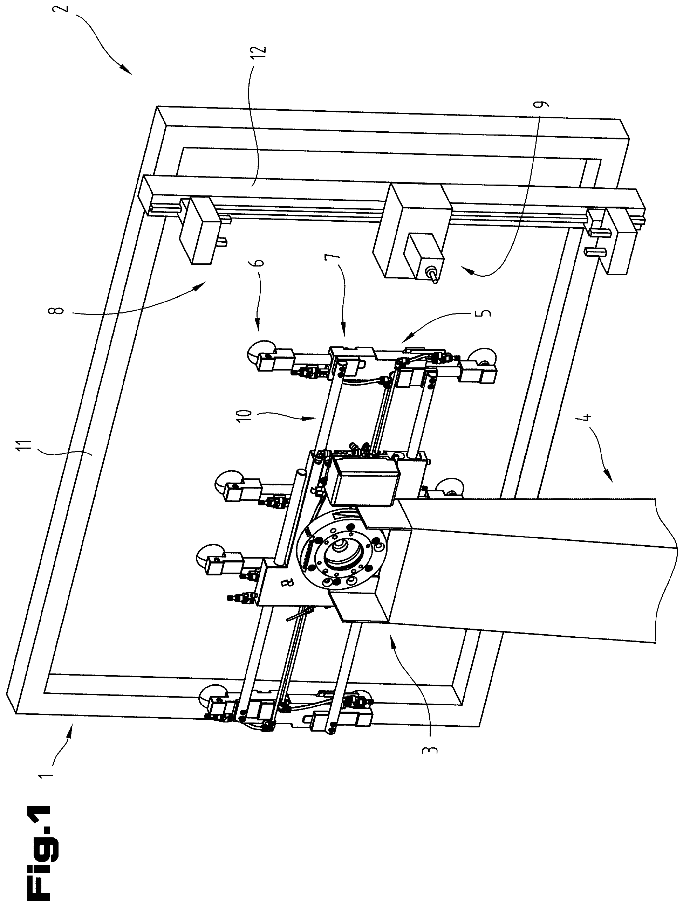

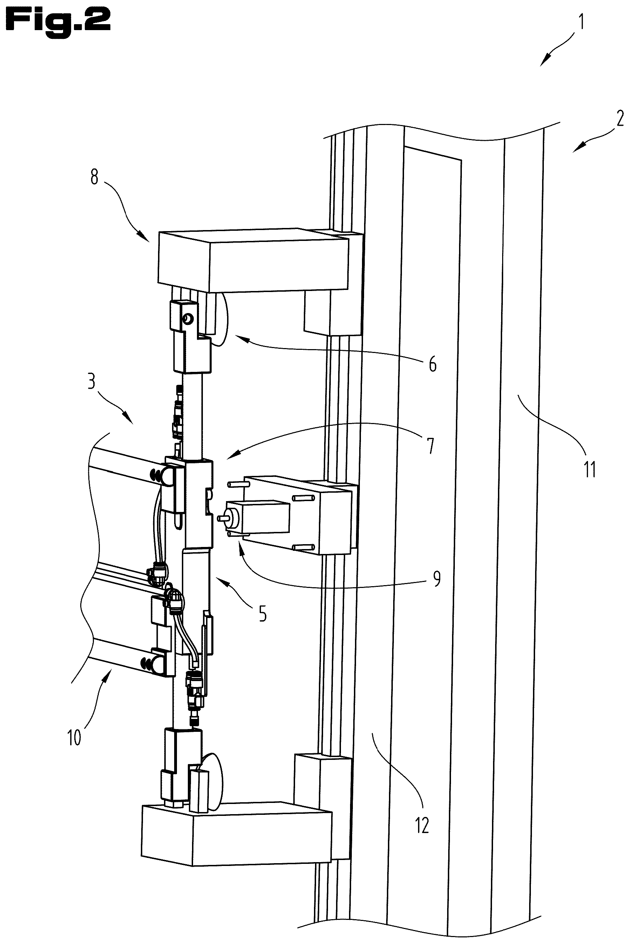

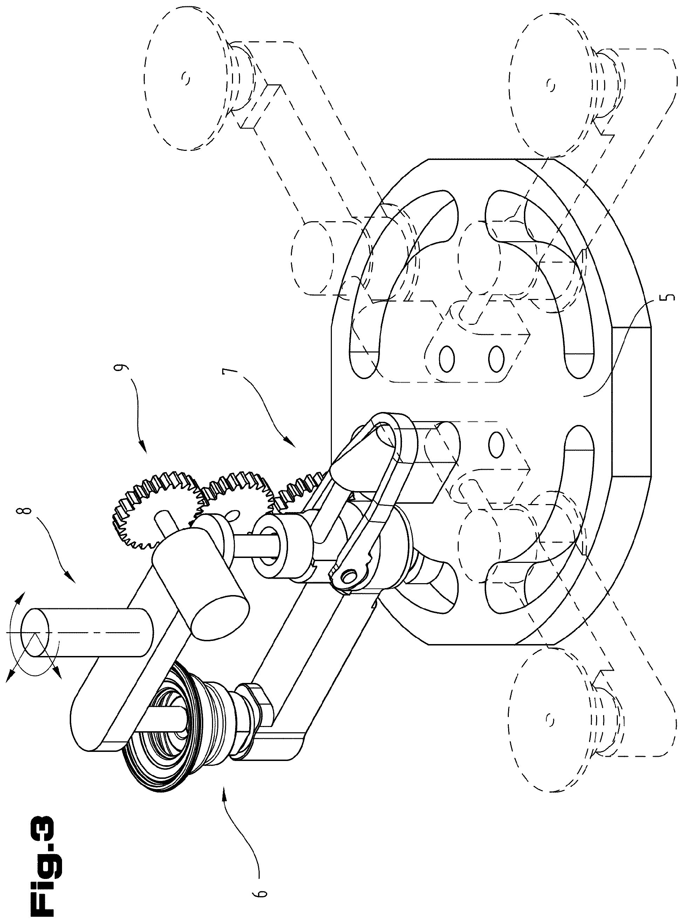

In der Fig. 1 ist ein Ausschnitt einer möglichen ersten Ausgestaltungsform einer Anlage 1 mit einer Justiervorrichtung 2 für einen Endeffektor 3 eines Manipulators in stark vereinfachter, schematischer Darstellung gezeigt, wobei der Endeffektor 3 in der Ablagevorrichtung 4 der Anlage 1 positioniert ist. In Fig. 2 ist eine Detailansicht der Justiervorrichtung 2 und eines Abschnitts des Endeffektors 3 des Manipulators in stark vereinfachter, schematischer Darstellung gezeigt. In der Fig. 3 ist eine mögliche Ausgestaltungsform von Teilen bzw. Komponenten der erfindungsgemäßen Anlage 1 und des damit adaptierbaren Endeffektors 3 gezeigt. Die Darstellungen Fig. 1 bis Fig. 3 werden nachfolgend ohne direkte Bezugnahme auf die jeweilige Darstellung erläutert, wobei für gleiche Teile gleiche Bezugszeichen bzw. Bauteilbezeichnungen verwendet werden.

Die Anlage 1 kann zum Manipulieren von Werkstücken geeignet sein. Insbesondere kann die Anlage 1 Teil eines Systems oder einer weiteren Anlage sein. So kann die Anlage 1 beispielsweise die Ablagevorrichtung 4 für den Endeffektor 3 und die, der Ablagevorrichtung 4 zuordenbare Justiervorrichtung 2 zum Adaptieren des Endeffektors 3 umfassen. Ein beispielhaftes System, in welches die Anlage 1 eingebunden ist, kann beispielsweise auch noch eine Biegemaschine oder eine Abkantpresse umfassen, wobei ein Manipulator der Anlage 1 zur Manipulation von Werkstücken mittels des Endeffektors 3 vorgesehen ist. Da derartige Werkstücke mitunter unterschiedlichste Dimensionen aufweisen können, kann es zweckmäßig sein, wenn der Endeffektor 3 des Manipulators adaptierbar, das heißt, an die unterschiedlichen möglichen Werkstückgeometrien von zu manipulierenden Werkstücken, anpassbar ist. Dazu umfasst die Anlage 1 die Justiervorrichtung 2, die jedenfalls der Ablagevorrichtung 4 zugeordnet ist und vorzugsweise auch in dessen unmittelbarer Umgebung positioniert sein kann.

Der Endeffektor 3 kann ein Tragelement 5 und ein damit gekoppeltes Greiferelement 6 umfassen, wobei das Greiferelement 6 entlang des Tragelements 5 geführt verlagerbar und relativ zum Tragelement 5 mittels einer Haltevorrichtung 7 am Tragelement 5 positionsfixierbar ist. Ein Werkstück kann dabei beispielsweise vom Greiferelement 6 im Zusammenwirken mit dem Manipulator aufgenommen und manipuliert werden. Unter einem Greiferelement 6 kann dabei zum Beispiel ein Vakuum-Greiferelement, ein Vakuumsauger, ein Magnetgreifer oder auch ein Zangengreifer verstanden werden. Jedenfalls ist ein Greiferelement 6 eine Komponente des Endeffektors, mittels welcher ein Werkstück aufnehmbar ist.

Weiters kann die Justiervorrichtung 2 ein Fixierelement 8 zum Positionsfixieren des Greiferelements 6 am Tragelement 5 bzw. relativ zum Tragelement 5 und eine, mit der Haltevorrichtung 7 wirkverbunden koppelbare Verschlussvorrichtung 9 zum Fixieren oder Lösen der Haltevorrichtung 7 umfassen, wobei die Positionsfixierung des Greiferelements 6 am bzw. relativ zum Tragelement 5 mittels der Verschlussvorrichtung 9 in Wirkverbindung mit der Haltevorrichtung 7 aufhebbar und herstellbar ist. Unter einer Haltevorrichtung 7 kann dabei jegliche Kopplung zum Positionsfixieren der Relativposition des Tragelements 5 und des Greiferelements 6 zueinander verstanden werden. Beispielsweise kann die Haltevorrichtung 7 eine Schraubverbindung umfassen, mittels welcher die Position des Greiferelements 6 relativ zum Tragelement 5 fixierbar ist. In diesem Fall kann dann beispielsweise die Verschlussvorrichtung 9 einen Abschnitt umfassen, der dazu ausgebildet ist, um mit der Schraubverbindung in Wirkverbindung zu treten, um mittels der Verschlussvorrichtung 9 die Positionsfixierung des Greiferelements 6 zum Tragelement 5 aufzuheben oder herzustellen. Jedenfalls kann somit die Positionsfixierung des Greiferelements 6 am Tragelement 5 mittels der Verschlussvorrichtung 9 in Wirkverbindung mit der Haltevorrichtung 7 aufgehoben oder hergestellt werden.

Das Tragelement 5 kann im Speziellen auch als Querträger ausgebildet sein, wie dies in Fig. 1 und Fig. 2 gezeigt ist. Alternativ ist es jedoch auch möglich, dass das Tragelement 5 als Grundplatte zur Aufnahme der Haltevorrichtung 7 für das Greiferelement 6 ausgebildet ist, wie dies in Fig. 3 dargestellt ist. Aus dieser Darstellung ist zu erkennen, dass das Greiferelement 6 am Tragelement 5 mittels der Haltevorrichtung 7 positionsfixierbar ist. Weiters sind in Fig. 3 das Fixierelement 8 und die Verschlussvorrichtung 9 zum Lösen der Haltevorrichtung 7 erkennbar. Das Greiferelement 6 ist in diesem Fall als Vakuumsauger ausgebildet. Wird nunmehr die Positionsfixierung des Greiferelements 6 durch die Haltevorrichtung 7 mittels der Verschlussvorrichtung 9 aufgelöst, so kann das Greiferelement 6 mittels des Fixierelements 8 entlang einer dafür vorgesehenen Führung im Tragelement 5 verlagert werden, sodass die Position des Greiferelements 6 dadurch adaptiert wird. Nachfolgend wird dieses hiermit ansatzweise angeschnittene Verfahren zum Adaptieren des Greiferelements 6 noch weiter erläutert.

Um also den Endeffektor 3 entsprechend einer geforderten Geometrie eines zu manipulierenden Werkstücks adaptieren zu können, kann mittels der vorhergehend beschriebenen Anlage ein Verfahren mit folgenden Verfahrensschritten durchgeführt werden:
- Positionieren des Endeffektors 3 im Nahbereich der Justiervorrichtung 2, insbesondere in der Ablagevorrichtung 4;
- Fixieren bzw. Positionsfixieren des Greiferelements 6 mittels des Fixierelements 8;
- Lösen des Greiferelements 6 durch Lösen der Haltevorrichtung 7 oder insbesondere zumindest einer Komponente der Haltevorrichtung 7 mittels der Verschlussvorrichtung 9;
- Verlagern des Greiferelements 6;
- Fixieren des Greiferelements 6 durch Fixieren der Haltevorrichtung 7 oder zumindest einer Komponente der Haltevorrichtung 7 mittels der Verschlussvorrichtung 9;

Dabei kann vorgesehen sein, dass das Greiferelement 6 durch eine Bewegung des Endeffektors 3 mittels des Manipulators verlagert wird. Dabei ist die Justiervorrichtung 2 positionsfixiert und der Manipulator bewegt den Endeffektor 3 relativ zur positionsfixierten Justiervorrichtung 2, wobei das Greiferelements 6 relativ zum Tragelement 5 verlagert wird.

Alternativ kann auch noch vorgesehen sein, dass das Greiferelement 6 durch eine Bewegung des Fixierelements 8 mittels der Justiervorrichtung 2 verlagert wird.

Jedenfalls kann der Endeffektor 3 so auf einfache Weise auf unterschiedliche Geometrien von Werkstücken eingestellt werden. Vorteilhaft ist dabei, dass am Endeffektor 3 selbst keine Antriebe oder Adaptiervorrichtungen ausgebildet sein müssen, um den Endeffektor 3 adaptieren zu können, sodass der Endeffektor 3 gewichtsparend und kostengünstig hergestellt werden kann.

Als eine mögliche Weiterentwicklung der Anlage 1 kann auch noch vorgesehen sein, dass der Endeffektor 3 ein weiters Tragelement 10, insbesondere einen Längsträger, umfasst, wobei das Tragelement 5, im Speziellen als ein Querträger ausgebildet ist und, entlang des weiters Tragelements 10, also insbesondere entlang des Längsträgers, geführt verlagerbar und relativ zum weiteren Tragelement 10 mittels der Haltevorrichtung 7 oder einer weiteren Haltevorrichtung am weiteren Tragelement 10 positionsfixierbar ist. In diesem Sinne kann beispielsweise auch noch vorgesehen sein, dass die mögliche weitere Haltevorrichtung mittels der Verschlussvorrichtung 9 oder auch mittels einer weiteren Verschlussvorrichtung lösbar oder relativ zum Querträger 5 positionsfixierbar ist, sodass die Position des Querträgers 5 relativ zum weiteren Tragelement 10 in analoger Weise, wie vorhergehend beschrieben, beispielsweise durch eine Bewegung des Manipulators 4 im Zusammenwirken mit der Justiervorrichtung 2 bzw. im Speziellen mit dem Fixierelement 8 oder einem weiteren Fixierelement der Justiervorrichtung 2 verlagerbar ist.

Um der Justiervorrichtung 2 eine notwendige Standfestigkeit für eine Adaptierung des Endeffektors 3 zu verleihen und/oder um die Positioniergenauigkeit des Fixierelements 8 und der Verschlussvorrichtung 9 zu gewährleisten, kann beispielsweise noch vorgesehen sein, dass die Justiervorrichtung 2 ein Rahmengerüst 11 und einen Querbalken 12 umfasst, wobei der Querbalken 12 am Rahmengerüst 11 geführt verlagerbar ist, und wobei das Fixierelement 8 und die Verschlussvorrichtung 9 jeweils am Querbalken 12 geführt verlagerbar sind.

Jedenfalls kann auch noch vorgesehen sein, dass das Fixierelement 8 zum Greiferelement 6 wenigstens abschnittsweise formkomplementär ausgebildet ist, sodass das Greiferelement 6 mittels des Fixierelements 8 in wenigstens eine Raumrichtung positionsfixierbar ist. Somit kann das Greiferelement 6 durch Verlagerung des Fixierelements 8 relativ zum Endeffektor 3 oder vice versa im gelösten Zustand der Haltevorrichtung 7 relativ zum Tragelement 5 verlagert werden.

Unter einem gelösten Zustand der Haltevorrichtung 7 ist dabei zu verstehen, dass das Greiferelement 6 leichtgängig relativ zum Tragelement 5 verlagerbar ist. In diesem Sinne kann beispielsweise vorgesehen sein, dass das Greiferelement 6 am Tragelement 5 mit einer entsprechenden Führung gelagert ist und im Speziellen durch einen entsprechenden Anschlag unverlierbar gelagert und verlagerbar ist. Jedenfalls kann mittels der Verschlussvorrichtung 9 in Wirkverbindung mit der Haltevorrichtung 7 eine lösbare Verbindung zwischen Tragelement 5 und Greiferelement 6 hergestellt werden.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

- 1: Anlage
- 2: Justiervorrichtung
- 3: Endeffektor
- 4: Ablagevorrichtung
- 5: Tragelement
- 6: Greiferelement
- 7: Haltevorrichtung
- 8: Fixierelement
- 9: Verschlussvorrichtung
- 10: Weiters Tragelement
- 11: Rahmengerüst
- 12: Querbalken

## Patentansprüche

1. Anlage (1) umfassend eine Ablagevorrichtung (4) für einen Endeffektor (3) eines Manipulators und eine, der Ablagevorrichtung (4) zuordenbaren Justiervorrichtung (2) zum Adaptieren des Endeffektors (3), wobei der Endeffektor (3) ein Tragelement (5) und ein damit gekoppeltes Greiferelement (6) umfasst, wobei das Greiferelement (6) entlang des Tragelements (5) geführt verlagerbar und relativ zum Tragelement (5) mittels einer Haltevorrichtung (7) am Tragelement (5) positionsfixierbar ist,
**dadurch gekennzeichnet, dass** die Justiervorrichtung (2) ein Fixierelement (8) zum Positionsfixieren des Greiferelements (6) und eine, mit der Haltevorrichtung (7) wirkverbunden koppelbare Verschlussvorrichtung (9) zum Fixieren oder Lösen der Haltevorrichtung (7) umfasst, wobei die Positionsfixierung des Greiferelements (6) am bzw. relativ zum Tragelement (5) mittels der Verschlussvorrichtung (9) in Wirkverbindung mit der Haltevorrichtung (7) aufhebbar und/oder herstellbar ist.

2. Anlage (1) nach Anspruch 1, **dadurch gekennzeichnet, dass** der Endeffektor (3) ein weiters Tragelement (10), insbesondere einen Längsträger, umfasst, wobei das Tragelement (5), im Speziellen ein Querträger, entlang des weiteren Tragelements (10) geführt verlagerbar und relativ zum weiteren Tragelement (10) mittels der Haltevorrichtung (7) oder einer weiteren Haltevorrichtung am weiteren Tragelement (10) positionsfixierbar ist.

3. Anlage (1) nach einem der vorhergehenden Ansprüche, **dadurch gekennzeichnet, dass** die Justiervorrichtung (2) ein Rahmengerüst (11) und einen Querbalken (12) umfasst, wobei der Querbalken (12) am Rahmengerüst (11) geführt verlagerbar ist, und wobei das Fixierelement (8) und die Verschlussvorrichtung (9) jeweils am Querbalken (12) geführt verlagerbar sind.

4. Anlage (1) nach einem der vorhergehenden Ansprüche, **dadurch gekennzeichnet, dass** das Fixierelement (8) zum Greiferelement (6) wenigstens abschnittsweise formkomplementär ausgebildet ist, sodass das Greiferelement (6) mittels des Fixierelements (8) in wenigstens eine Raumrichtung positionsfixierbar ist.

5. Anlage (1) nach einem der vorhergehenden Ansprüche, **dadurch gekennzeichnet, dass** mittels der Verschlussvorrichtung (9) in Wirkverbindung mit der Haltevorrichtung (7) eine lösbare Verbindung zwischen Tragelement (5) und Greiferelement (6) herstellbar ist.

6. Anlage (1) nach einem der vorhergehenden Ansprüche, **dadurch gekennzeichnet, dass** das Greiferelement (6) durch Verlagerung des Fixierelements (8) relativ zum Endeffektor (3) oder vice versa im gelösten Zustand der Haltevorrichtung (7) relativ zum Tragelement (5) verlagerbar ist.

7. Verfahren zum Adaptieren eines Endeffektors (3) eines Manipulators einer Anlage (1) mit einer, einer Ablagevorrichtung (4) der Anlage (1) zuordenbaren Justiervorrichtung (2),
- wobei der Endeffektor (3) ein Tragelement (5) und ein Greiferelement (6) umfasst, wobei das Greiferelement (6) entlang des Tragelements (5) geführt verlagerbar und relativ zum Tragelement (5) mittels einer Haltevorrichtung (7) am Tragelement (5) positionsfixierbar ist,
- wobei die Justiervorrichtung (2) ein Fixierelement (8) und eine Verschlussvorrichtung (9) umfasst, das Verfahren umfassend die folgenden Verfahrensschritte:
- Positionieren des Endeffektors (3) im Nahbereich der Justiervorrichtung (2), insbesondere in der Ablagevorrichtung (4);
- Fixieren bzw. Positionsfixieren des Greiferelements (6) mittels des Fixierelements (8);
- Lösen des Greiferelements (6) durch Lösen der Haltevorrichtung (7) mittels der Verschlussvorrichtung (9);
- Verlagern des Greiferelements (6);
- Fixieren des Greiferelements (6) durch Fixieren der Haltevorrichtung (7) mittels der Verschlussvorrichtung (9).

8. Verfahren nach Anspruch 7, **dadurch gekennzeichnet, dass** das Greiferelement (6) durch eine Bewegung des Endeffektors (3) mittels des Manipulators (4) verlagert wird.

9. Verfahren nach Anspruch 7, **dadurch gekennzeichnet, dass** das Greiferelement (6) durch eine Bewegung des Fixierelements (8) mittels der Justiervorrichtung (2) verlagert wird.

10. Verfahren nach einem der Ansprüche 7 bis 9, **dadurch gekennzeichnet, dass** die Haltevorrichtung (7) eine Schraubverbindung zum Fixieren und Lösen des Greiferelements (6) aufweist, wobei die Schraubverbindung mittels der Verschlussvorrichtung (9) fixiert oder gelöst wird.
